# EUROPEAN PATENT APPLICATION

(11) **EP 1 178 425 A2**
(43) Date of publication of application: **06.02.2002**
(21) Application number: 01410091.1
(22) Date of filing: 23.07.2001
(51) Int. Cl.: G06F 17/60

(54) **Remuneration calculating method, remuneration calculating apparatus, and computer memory product**

(30) Priority: 26.07.2000 JP 2000224940
(71) Applicant: Busitech Corporation, Amagasaki-shi, Hyogo 661-0976 (JP)
(72) Inventor: Higashi, Kazuo, Toyono-gun, Osaka 563-0104 (JP); Myojin, Satoru, c/o Osaka Gas Info. System Res., Nishi-ku, Osaka-shi, Osaka 550-0023 (JP)
(74) Representative: de Beaumont, Michel

(57) **Abstract**

Work is divided into job units, a base appraisal point is set for each job unit, whole or some amount of the base appraisal point is given as an appraisal point to a worker (200) according to the accomplishment status of the job unit, the appraisal point is not simply converted to remuneration, remuneration is determined based on a monetary value resulting from conversion of the appraisal point by multiplication of the appraisal point by a conversion rate determined according to the operating performance of an enterprise entity (100), and a profit and loss statement and a balance sheet of the worker (200) to the enterprise entity (100) are created. A remuneration calculating method, a remuneration calculating apparatus and a computer memory product are provided.

## Description

### BACKGROUND OF THE INVENTION

The present invention relates to a remuneration calculating method for calculating remuneration of workers who have made a labor agreement with an enterprise entity, a remuneration calculating apparatus adopting this method and a computer memory product on which a computer program for implementing this apparatus is recorded, and more particularly relates to a remuneration calculating method, a remuneration calculating apparatus and a computer memory product which are capable of calculating appropriate remuneration for each worker irrespective of the contents of work.

In Japan, a conventional seniority system, i.e., a system in which each worker's position and remuneration are determined according to his or her age and length of service, has begun to collapse, and the social structure is changing toward a merit system and a result-oriented system in which workers' remuneration is determined according to their merits and results achieved by them.

However, for introduction of the result-oriented system, enterprise entities face a problem that they must establish a method for correctly and fairly appraising the results of labor of workers.

For example, it is easy to appraise work such as sales work that is directly connected to profits, but it is difficult to appraise clerical work such as work related to general affairs and accounting which are not directly connected to profits, and further it is almost impossible to appraise work such as research work and planning work whose results will be known in the future. Thus, in the actual situation, work is not fairly appraised between different types of jobs.

Moreover, since the merit system and result-oriented system appraise workers irrespective of the overall operating performance of an enterprise entity and the general economic conditions of the society, they may cause an extraordinary rise or lowering of personnel expenses and may further cause a problem in some case that they tighten the management of the enterprise entity itself.

Additionally, there is a problem for the workers that a very large difference between the maximum and minimum remuneration may cause instability in the life of workers.

Besides, there is a problem which must be solved to allow the workers to efficiently work and design their life that the workers must be made able to grasp their labor value, estimate remuneration to be received and connect them to designing of their future life.

### BRIEF SUMMARY OF THE INVENTION

The present invention was invented in view of the above situations, and a principle object of the present invention is to provide a remuneration calculating method which adopts the result-oriented system by using a technique of dividing work into job units, setting a base appraisal point for each job unit and giving whole or some amount of the base appraisal point as an appraisal point to each worker according to the accomplishment status of the job unit, and which calculates remuneration of the worker according to the overall operating performance of an enterprise entity and the accomplishment status of a corresponding job by not simply converting the appraisal point to remuneration but converting the appraisal point to a monetary value by multiplying the appraisal point by a conversion rate that is determined according to the operating performance of the enterprise entity. It is also an object of the present invention to provide a remuneration calculating apparatus adopting such a method, and a computer memory product on which a program for realizing the calculation of remuneration is recorded.

Another object is to provide a remuneration calculating method and so on, capable of fairly appraising different types of work by setting a base appraisal point for sales work based on an operation value representing the results of labor, setting a base appraisal point for work related to general affairs based on expenses needed for the operation, and setting a base appraisal point for research work by assuming an operation value in the future and converting it to an operation value at present.

Still another object is to provide a remuneration calculating method and so on, capable of adjusting remuneration, such as a salary to be paid according to the result of work, by taking a monetary value to be paid to each worker in the future, such as retirement allowance, to be a monetary value for adjustment and increasing or decreasing the monetary value for adjustment, and thereby limiting an excessive increase and decrease of remuneration and stabilizing the workers' life.

Yet another object is to provide a remuneration calculating method and so on, capable of enabling each worker to grasp his or her labor value, estimate remuneration to be obtained and connect them to designing of his or her future life by creating a profit and loss statement and a balance sheet of the worker to the enterprise entity.

A remuneration calculating method of the first invention is a remuneration calculating method for calculating remuneration of workers who have made a labor agreement with an enterprise entity, characterized in that: work is divided into job units to be executed by one or a plurality of persons; a base appraisal point for quantitatively appraising each of the job units is set; each worker is given an appraisal point which represents whole or some amount of a base appraisal point set for each job unit, according to an accomplishment status of the job unit; a conversion rate for converting an appraisal point to a monetary value is determined; and remuneration of each worker is calculated by converting an appraisal point given to the worker based on the conversion rate.

According to the remuneration calculating method of the first invention, work is divided into job units and an appraisal point is given to a worker according to an accomplishment status of a corresponding job unit, thereby enabling appraisal of the contents and results of work of the worker for each job unit. Moreover, remuneration is calculated by multiplying the given appraisal point by a conversion rate determined according the operating performance of the enterprise entity. Therefore, for example, by decreasing the conversion rate when the operating performance of the enterprise entity became worth, or by increasing the conversion rate when the operating performance was improved, the operating performance of the enterprise entity can be reflected on remuneration, and by further introducing a system of changing the conversion rate at short-period intervals, the operating performance is reflected on remuneration in a short period. Thus, the workers' will to work is heightened and the enterprise entity can run sound business.

The second invention is based on the remuneration calculating method of the first invention and characterized in that: expenses including remuneration of the worker, which were needed for accomplishing the job unit is calculated; a monetary value of the accomplished job unit is calculated; and a profit and loss statement of the worker to the enterprise entity for a predetermined term is created, based on the calculated expenses and monetary value.

In the remuneration calculating method according to the second invention, since a profit and loss statement of the worker to the enterprise entity is created, the worker can grasp his or her labor value and estimate remuneration to be obtained.

The third invention is based on the remuneration calculating method of the first or second invention and characterized in that said job unit and base appraisal point are set by being proposed by the worker and approved by an approver appointed beforehand.

In the remuneration calculating method according to the third invention, by letting the worker set an operation value and a base appraisal point and a third party such as a personnel-resource appraising section or an external appraising center approve them, the monetary value and appraisal criteria can be made clear and the worker can have independence.

The fourth invention is based on the remuneration calculating method of any one of the first through third inventions and characterized in that said base appraisal point is set based on a present operation value representing an operation value at present and/or expenses needed for the operation.

In the remuneration calculating method according to the fourth invention, for example, a base appraisal point for work such as sales work which is directly connected to profits is set based on the present operation value representing the results of labor, and a base appraisal point for clerical work, such as work related to general affairs and accounting, which is not directly connected to profits is set based on how the expenses needed for the work or personnel expenses in some case are limited as compared to other company or a model employee. Accordingly, it is possible to fairly appraise different types of work.

The fifth invention is based on the remuneration calculating method of any one of the first through third inventions and characterized in that an operation value at a specific time point in the future is assumed as a future operation value, the assumed future operation value is converted into a present operation value representing an operation value at present, and said base appraisal point is set based on the present operation value.

In the remuneration calculating method of the fifth invention, a base appraisal point for work, such as research work and planning work, whose results will be known in the future is set by assuming an operation value at a specific time point in the future, adding factors, such as the development period, success probability and a discount rate, and converting the resultant value to a present operation value. Accordingly, it is possible to fairly appraise different types of work.

The sixth invention is based on the remuneration calculating method of any one of the first through fifth inventions and characterized in that: an interim remuneration is calculated from the conversion rate and appraisal point; a monetary value for adjustment which has been prepared is deducted, if the interim remuneration is lower than the first predetermined value; remuneration of the worker is calculated by adding the deducted value to the interim remuneration; the monetary value for adjustment is increased, if the interim remuneration is higher than the second predetermined value; and remuneration of the worker is calculated by deducting the increased value from the interim remuneration.

In the remuneration calculating method according to the sixth invention, monetary values which are not directly connected to work at the present time, including monetary values such as retirement allowance to be paid to the workers in the future and monetary values such as allowance given to the workers according to the qualification and positions of the workers by just being employees of the enterprise entity, are taken to be a monetary value for adjustment. Further, if an interim remuneration calculated primarily is less than the first predetermined value set as a minimum remuneration, the shortage is covered by the monetary value for adjustment, and, if the interim remuneration is not less than the second predetermined value, the monetary value for adjustment is increased. Accordingly, it is possible to limit an excessive increase and decrease of remuneration and stabilize the workers' life.

Furthermore, when the monetary value for adjustment is considered as funds to be used by the enterprise entity as a whole, by taking a part of remuneration of excellent workers or workers executing work that directly produces profits in the form of so-called aids or the like and by allocating the taken amount to workers who can not carry out sufficient work, such as newly hired employees, or workers who execute work that does not directly produce profits according to a need, it is possible to keep the balance of remuneration between the workers.

The seventh invention is the remuneration calculating method of the sixth invention and characterized in that: a debt-credit relationship between the enterprise entity and the worker is calculated; and a balance sheet of the worker to the enterprise entity is created after adjusting the calculated debt-credit relationship by using the monetary value for adjustment.

In the remuneration calculating method according to the seventh invention, a profit and loss statement is created by regarding deposits and savings, such as an employee deposit, and marketable securities, such as corporation's own stocks, as current assets, regarding asset accumulation savings, right for retirement allowance and the market values of investment marketable securities as fixed assets, regarding a short-term loan from the enterprise entity to the worker as a current liability, regarding a long-term debt such as a housing loan as a fixed liability, and further setting various types of monetary values for adjustment. Accordingly, the worker can grasp his or her labor value and connect it to designing of his or her life.

A remuneration calculating method of the eighth invention is a remuneration calculating method for calculating remuneration of workers who have made a labor agreement with an enterprise entity, characterized by comprising the steps of: dividing work into job units to be executed by one or a plurality of persons; setting a base appraisal point for quantitatively appraising each of the job units; giving each worker an appraisal point which represents whole or some amount of a base appraisal point set for each job unit, according to an accomplishment status of the job unit; determining a conversion rate for converting an appraisal point to a monetary value; and calculating remuneration of each worker by converting an appraisal point given to the worker based on the conversion rate.

According to the remuneration calculating method of the eighth invention, work is divided into job units and an appraisal point is given to a worker according to an accomplishment status of a corresponding job unit, thereby enabling appraisal of the contents and results of work of the worker for each job unit. Moreover, remuneration is calculated by multiplying the given appraisal point by a conversion rate determined according the operating performance of the enterprise entity. Therefore, for example, by decreasing the conversion rate when the operating performance of the enterprise entity became worth, or by increasing the conversion rate when the operating performance was improved, the operating performance of the enterprise entity can be reflected on remuneration, and by further introducing a system of changing the conversion rate at short-period intervals, the operating performance is reflected on remuneration in a short period. Thus, the workers' will to work is heightened and the enterprise entity can run sound business.

The ninth invention is the remuneration calculating method of the eighth invention and characterized by further comprising the steps of: calculating expenses including remuneration of the worker, which were needed for accomplishing the job unit; calculating a monetary value of the accomplished job unit; and creating a profit and loss statement of the worker to the enterprise entity for a predetermined term, based on the calculated expenses and monetary value.

In the remuneration calculating method according to the ninth invention, since a profit and loss statement of the worker to the enterprise entity is created, the worker can grasp his or her labor value and estimate remuneration to be obtained.

The tenth invention is based on the remuneration calculating method of the eighth or tenth invention and characterized by further comprising the steps of: calculating an interim remuneration from the conversion rate and appraisal point; deducting a monetary value for adjustment which has been prepared, if the calculated interim remuneration is lower than the first predetermined value; calculating remuneration of the worker by adding the deducted value to the interim remuneration; increasing the monetary value for adjustment, if the calculated interim remuneration is higher than the second predetermined value; and calculating remuneration of the worker by deducting the increased value from the interim remuneration.

In the remuneration calculating method according to the tenth invention, monetary values which are not directly connected to work at the present time, including monetary values such as retirement allowance to be paid to the workers in the future and monetary values such as allowance given to the workers according to the qualification and positions of the workers by just being employees of the enterprise entity, are taken to be a monetary value for adjustment. Further, if an interim remuneration calculated primarily is less than the first predetermined value set as a minimum remuneration, the shortage is covered by the monetary value for adjustment, and, if the interim remuneration is not less than the second predetermined value, the monetary value for adjustment is increased. Accordingly, it is possible to limit an excessive increase and decrease of remuneration and stabilize the workers' life.

The eleventh invention is the remuneration calculating method of the tenth invention and characterized by further comprising the steps of: calculating a debt-credit relationship between the enterprise entity and the worker; and creating a balance sheet of the worker to the enterprise entity after adjusting the calculated debt-credit relationship by using the monetary value for adjustment.

In the remuneration calculating method according to the eleventh invention, capable of enabling each worker to grasp his or her labor value, and connecting them to designing of his or her future life by creating a balance sheet of the worker to the enterprise entity.

The twelfth invention is a remuneration calculating apparatus for calculating remuneration of workers who have made a labor agreement with an enterprise entity, characterized by comprising: means for accessing a work database in which information about work is recorded in conjunction with an appraisal point indicating an appraised value of work; means for accessing an operating-performance database in which information about operating performance of the enterprise entity is recorded in conjunction with a conversion rate for converting the appraisal point to a monetary value; means for accepting input of a job unit given by dividing work, a base appraisal point set for the job unit, and worker's information indicating a worker assigned the job unit; means for recording the accepted job unit, base appraisal point and worker's information in conjunction with each other in the work database; means for accepting input of an accomplishment status value indicating an accomplishment status of the job unit; means for calculating an appraisal point based on the accepted accomplishment status value and base appraisal point; means for recording the calculated appraisal point in conjunction with the worker's information in the work database; means for determining a conversion rate based on the information recorded in the operating-performance database; and calculating means for calculating remuneration of the worker based on the conversion rate and appraisal point.

In the remuneration calculating apparatus according to the twelfth invention, work is divided into job units and an appraisal point is given to a worker according to an accomplishment status of a corresponding job unit, thereby enabling appraisal of the contents and results of the work of the worker for each job unit. Moreover, remuneration is calculated by multiplying the given appraisal point by a conversion rate determined according the operating performance of the enterprise entity. Therefore, for example, by decreasing the conversion rate when the operating performance of the enterprise entity became worth, or by increasing the conversion rate when the operating performance was improved, the operating performance of the enterprise entity can be reflected on remuneration, and by further introducing a system of changing the conversion rate at short-period intervals, the operating performance is reflected on remuneration in a short period. Accordingly, the workers' will to work is heightened and the enterprise entity can run sound business.

The thirteenth invention is based on the remuneration calculating apparatus of the twelfth invention and characterized by further comprising: means for calculating expense information indicating expenses needed for accomplishing the job unit; means for calculating a monetary value resulting from accomplishment of the job unit; and means for creating a profit and loss statement of the worker to the enterprise entity based on the calculated expense information and monetary value.

In the remuneration calculating apparatus according to the thirteenth invention, since a profit and loss statement of the worker to the enterprise entity is created, the worker can grasp his or her labor value and estimate remuneration to be obtained.

The fourteenth invention is based on the remuneration calculating apparatus of the twelfth or thirteenth invention and characterized by further comprising: means for accepting input of a future operation value representing an operation value at a specific time point in the future; means for converting the accepted future operation value to a present operation value representing an operation value at present; and means for setting a base appraisal point based on the present operation value.

In the remuneration calculating apparatus according to the fourteenth invention, a base appraisal point for work, such as research work and planning work, whose results will be known in the future is set by assuming an operation value at a specific time point in the future, adding factors such as the development period and success probability, and converting the resultant value to a present operation value. Accordingly, it is possible to fairly appraise different types of work.

The fifteenth invention is the remuneration calculating apparatus of any one of the twelfth through fourteenth inventions and characterized by further comprising: means for accessing a debt and credit database in which a debt-credit relationship between the enterprise entity and the worker, including a monetary value for adjustment for adjusting remuneration, is recorded; means for calculating an interim remuneration from the conversion rate and appraisal point; means for deducting the monetary value for adjustment recorded in the debt and credit database, if the interim remuneration is lower than a first predetermined value; and means for increasing the monetary value for adjustment recorded in the debt and credit database, if the interim remuneration is higher than a second predetermined value which is not lower than the first predetermined value, wherein, when the monetary value for adjustment was deducted, the calculating means calculates remuneration of the worker by adding a deducted value to the interim remuneration, and, when the monetary value for adjustment was increased, the calculating means calculates remuneration of the worker by deducting an increased value from the interim remuneration.

In the remuneration calculating apparatus according to the fifteenth invention, monetary values which are not directly connected to work at the present time, including monetary values such as retirement allowance to be paid to the workers in the future and monetary values given as allowance to workers according to the qualification and positions of the workers by just being employees of the enterprise entity, are taken to be a monetary value for adjustment. Further, if an interim remuneration calculated primarily is less than the first predetermined value, the shortage is covered by the monetary value for adjustment, and, if the interim remuneration is not less than the second predetermined value, the monetary value for adjustment is increased. Accordingly, it is possible to limit an excessive increase and decrease of remuneration and stabilize the workers' life.

Furthermore, when the monetary value for adjustment is considered as funds to be used by the enterprise entity as a whole, by taking a part of remuneration of excellent workers or workers executing work that directly produces profits in the form of so-called aids or the like and by allocating the taken amount to workers who can not carry out sufficient work, such as newly hired employees, or workers who execute work which does not directly produce profits according to a need, it is possible to keep the balance of remuneration between the workers.

The sixteenth invention is based on the remuneration calculating apparatus of the fifteenth invention and characterized by further comprising: means for creating a balance sheet of the worker to the enterprise entity, after adjusting the debt-credit relationship recorded in the debt and credit database by using the monetary value for adjustment.

In the remuneration calculating apparatus according to the sixteenth invention, a profit and loss statement is created by regarding deposits and savings, such as an employee deposit, and marketable securities, such as corporation's own stocks, as current assets, regarding asset accumulation savings, right for retirement allowance and investment marketable securities as fixed assets, regarding a short-term loan from the enterprise entity to the worker as a current liability, regarding a long-term debt such as a housing loan as a fixed liability, and further setting various types of monetary values for adjustment. Accordingly, the worker can grasp his or her labor value and connect it to designing of his or her life.

A computer-readable computer memory product according to the seventeenth invention, characterized by including: program code means for causing the computer to accept input of a job unit given by dividing work, a base appraisal point set for the job unit, and worker's information indicating a worker assigned the job unit; program code means for causing the computer to record the accepted job unit, base appraisal point and worker's information in conjunction with each other; program code means for causing the computer to accept input of an accomplishment status value indicating an accomplishment status of the job unit; program code means for causing the computer to calculate an appraisal point indicating an appraised value of work based on the accepted accomplishment status value and base appraisal point; program code means for causing the computer to determine a conversion rate for converting the appraisal point to a monetary value; and program code means for causing the computer to calculate remuneration of the worker based on the conversion rate and appraisal point.

With the computer-readable computer memory product according to the seventeenth invention, by executing the recorded program with a general-purpose computer such as a server computer, the general-purpose computer operates as a remuneration calculating apparatus as mentioned above.

The above and further objects and features of the invention will more fully be apparent from the following detailed description with accompanying drawings.

### BRIEF DESCRIPTION OF THE SEVERAL VIEWS OF THE DRAWINGS

FIG. 1 is an explanatory view showing the concept of a remuneration calculating method of the present invention;
FIG. 2 is a block diagram showing the structure of a system using a remuneration calculating apparatus of the present invention;
FIG. 3 is an explanatory view showing the concept of a computer memory product on which a computer program for implementing the remuneration calculating apparatus of the present invention is recorded;
FIG. 4 is a flowchart showing a base appraisal point setting method included in the remuneration calculating method of the present invention;
FIG. 5 is a flowchart showing a present-operation-value setting method included in the remuneration calculating method of the present invention;
FIG. 6 is a flowchart showing the base appraisal point setting processes performed in the remuneration calculating apparatus of the present invention;
FIG. 7 is a flowchart showing the present-operation-value setting processes performed in the remuneration calculating apparatus of the present invention;
FIG. 8A and FIG. 8B are flowcharts showing the job unit and base appraisal point setting processes performed in a remuneration calculating apparatus and a terminal unit for use with the remuneration calculating method of the present invention;
FIG. 9A and FIG. 9B are flowcharts showing the remuneration calculating processes performed in the remuneration calculating apparatus of the present invention;
FIG. 10 is a flowchart showing the profit and loss statement creating processes performed in the remuneration calculating apparatus of the present invention;
FIG. 11 is an explanatory view showing a profit and loss statement outputted by the remuneration calculating apparatus of the present invention;
FIG. 12 is a flowchart showing the balance sheet creating processes performed in the remuneration calculating apparatus of the present invention; and
FIG. 13 is an explanatory view showing a balance sheet outputted by the remuneration calculating apparatus of the present invention.

### DETAILED DESCRIPTION OF THE INVENTION

The following description will explain the present invention in detail with reference to the drawings illustrating embodiments thereof.

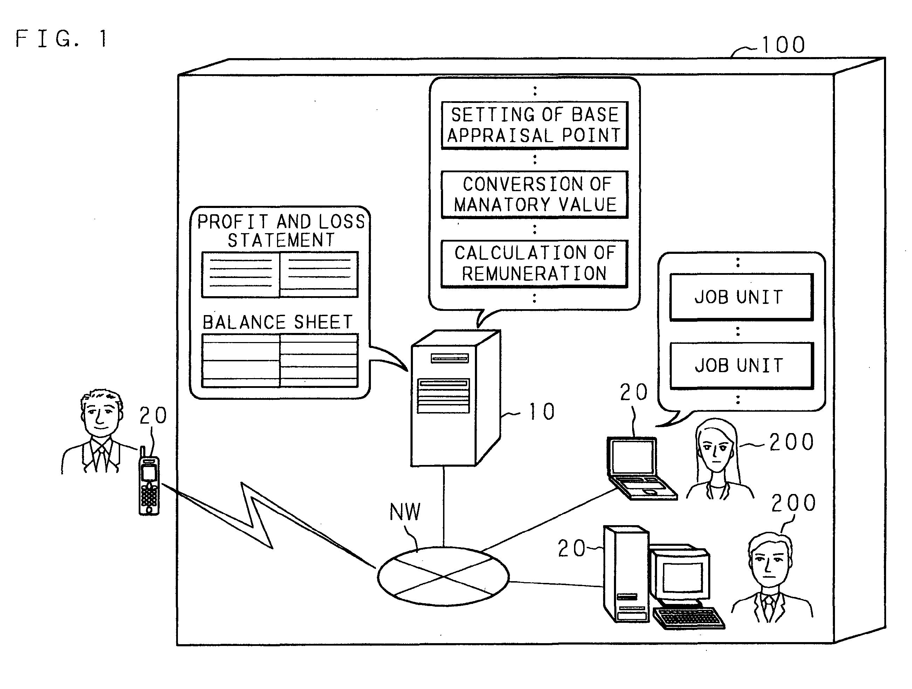

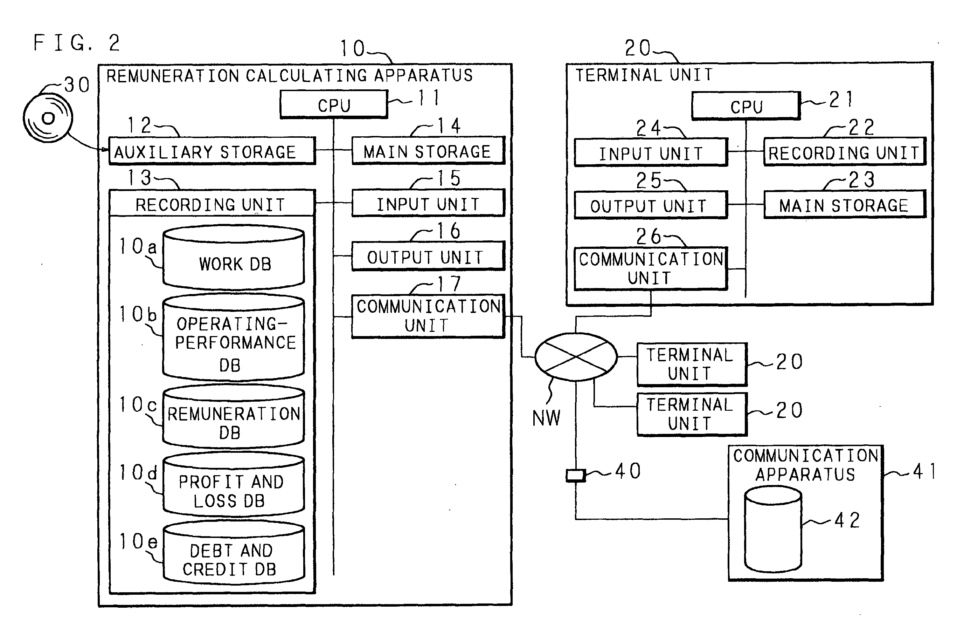

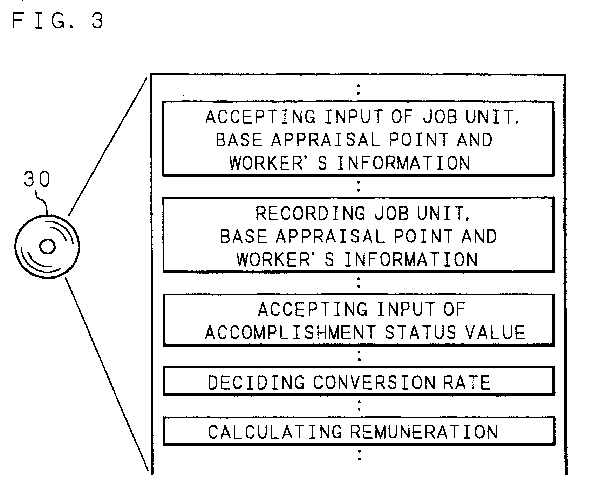

FIG. 1 is an explanatory view showing the concept of a remuneration calculating method of the present invention, FIG. 2 is a block diagram showing the structure of a system using the remuneration calculating apparatus of the present invention, and FIG. 3 is an explanatory view showing the concept of a computer memory product on which a computer program for implementing the remuneration calculating apparatus of the present invention is recorded.

Numeral 10 in these drawings represents the remuneration calculating apparatus of the present invention using a server computer, the remuneration calculating apparatus 10 is managed by an enterprise entity 100, the enterprise entity 100 has made a labor agreement with workers 200, and the workers 200 operate terminal unites 20 for communicating with the remuneration calculating apparatus 10 through a communication network NW such as a LAN.

Alternatively, it is also possible that the remuneration calculating apparatus 10 is managed by other service enterprise entity who has made a contract with the enterprise entity 100 to calculate remuneration for the enterprise entity 100, and the labor agreement between the enterprise entity 100 and the workers 200 is not necessarily a labor agreement for regular employment and may be a labor agreement for periodical employment such as employment as part-time or casual employees. Further, the workers 200 are not necessarily natural persons and may be entities such as contractors and various types of organizations, and the enterprise entity 100 may be an organization performing business activities in a wide sense, such as a private enterprise and a local public entity.

In addition, it is possible to use a portable computer such as a cellular phone and PDA (Personal Digital Assistants) as the terminal unit 20 and access the remuneration calculating apparatus 10 from a destination of a business trip so as to have reference information for executing work at the destination of the business trip.

The remuneration calculating apparatus 10 comprises an auxiliary storage 12 such as a CD-ROM drive for reading information such as a program and data from a computer memory product 30 such as a CD-ROM on which information such as a program and data for use with the remuneration calculating apparatus of the present invention shown in FIG. 3 are recorded; and a recording unit 13 such as a hard disk on which the information such as a program and data read by the auxiliary storage 12 is to be recorded.

The server computer acts as the remuneration calculating apparatus 10 of the present invention by reading the information such as a program and data from the recording unit 13, storing it in a main storage 14 for storing information, and executing the information by a CPU 11.

It is also possible to connect the remuneration calculating apparatus 10 to a communication apparatus 41 that is managed by an external communication enterprise entity such as an ASP (Application Service Provider) through the communication network NW and a communication unit 40 such as a router, to download the information such as a program and data of the present invention recorded on a computer memory product 42 of the present invention, which is used in the communication apparatus 41, by transferring the information through a transfer medium such as a communication line, a repeater and a carrier wave, and to store the information in the recording unit 13.

Moreover, a part of the recording area of the recording unit 13 is used as various types of databases such as a work database (DB) 10a for recording work in conjunction with an appraisal point indicating an appraised value of the work, an operating-performance database (DB) 10b for recording information about the operating performance of the enterprise entity 100 in conjunction with a conversion rate for converting an appraisal point to a monetary value, a remuneration database (DB) 10c for recording information about remuneration of each worker 200, a profit and loss database (DB) 10d for recording the expenses needed for the work of the worker 200 and the results of the work, and a debt and credit database (DB) 10e for recording a debt-credit relationship between the enterprise entity 100 and the worker 200, and these various types of databases are accessed, if necessary, to record/read the information.

Note that, instead of using a part of the recording area of the recording unit 13 as various types of databases, it is possible to connect other device comprising a recording unit to the remuneration calculating apparatus 10 and use the recording unit as various types of databases.

Besides, the remuneration calculating apparatus 10 comprises an input unit 15 such as a mouse and a keyboard; an output unit 16 such as a monitor and a printer; and a communication unit 17 to be connected to the communication network NW.

Alternatively, instead of performing input and output operations using the input unit 15 and output unit 16, the terminal unit 20 connected to the remuneration calculating apparatus 10 may be used as an input unit and an output unit for performing input and output operations with respect to the remuneration calculating apparatus 10.

The terminal unit 20 comprises a CPU 21, a recording unit 22, a main storage 23, an input unit 24, an output unit 25 and a communication unit 26.

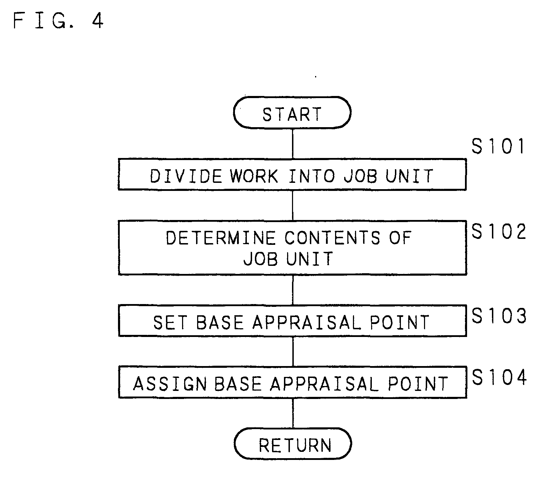

Next, referring to the flowchart shown in FIG. 4, the following description will explain the base appraisal point setting method included in the remuneration calculating method of the present invention.

First, the contents of various types of work of the enterprise entity 100 are analyzed and divided into job units (S101), the contents of each of the job units, such as a monetary value, execution period and job classification, are determined (S102), a base appraisal point for appraising the monetary value of the job in relative quantity is set for the job unit (S103), and the job unit and the base appraisal point are assigned to one or a plurality of workers 200 who execute the job unit (S104).

Here, the job units aim for facilitating calculation of monetary values by dividing work into smaller units; and the smaller the job unit, the clearer the contents of the job unit, and the larger the job unit, the more easily the remuneration is calculated. It is therefore possible to arbitrarily set job units according to the contents of the operations and scale of the enterprise entity 100 who employs the remuneration calculating method of the present invention. Note that in the sense of dividing work into minimum functioning units, the job units may be referred to as the "job cells".

Farther, one job unit may be assigned to one worker 200 or to a plurality of workers 200, and usually one worker 200 is assigned a plurality of job units.

The job classification refers to classification of various types of work, such as sales work, clerical work and research work, and a method of calculating a monetary value is set for each job classification.

For example, a base appraisal point for work, such as sales work, which is directly connected to profits is set based on a present operation value indicating the operation value at present, a base appraisal point for clerical work, such as work related to general affairs and accounting, which is not directly connected to profits is set based on how the expenses needed for the work or personnel expenses in some case are limited as compared to other company or a model worker.

Here, the profits do not mean profits in a narrow sense, such as ordinary profit and gross profit, but refer to profits in a wide sense, such as a sales amount, non-operating profit and extraordinary profit, which can be made clear in monetary values, and a value obtained by allotting the overall profit to each job unit is set as a base appraisal point.

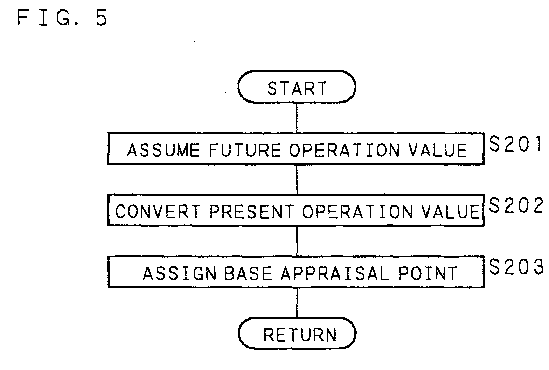

Further, for work such as research work and planning work whose work results will be known in the future, as shown in the flowchart of FIG. 5 illustrating the present-operation-value setting method included in the remuneration calculating method of the present invention, an operation value at a specific time point in the future is assumed as a future operation value (S201), factors such as the development period and success probability for the operation are added and then the resultant value is converted to a present operation value (S202), and a base appraisal point is set based on the resultant present operation value (S203).

Although such a base appraisal point setting method is important processes in the remuneration calculating method of the present invention, as these processes need a great deal of labor, it is ideal to place an order to an external service agent, who performs remuneration calculation, to set a base appraisal point based on objective appraisal.

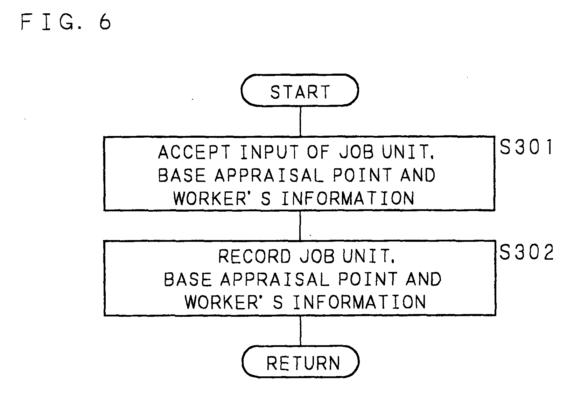

Next, referring to the flowchart shown in FIG. 6, the following description will explain the base appraisal point setting processes performed in the remuneration calculating apparatus 10 of the present invention.

A person in charge of inputting of information in the enterprise entity 100 inputs various information, such as a job unit, a base appraisal point and worker's information indicating a worker 200 who is assigned the base appraisal point, which were set in steps S101 through S104, through the remuneration calculating apparatus 10 or the terminal unit 2.

The remuneration calculating apparatus 10 accepts the input of the job unit, base appraisal point and worker's information (S301), and records the accepted job unit, base appraisal point and worker's information in conjunction with each other in the work database 10a (S302).

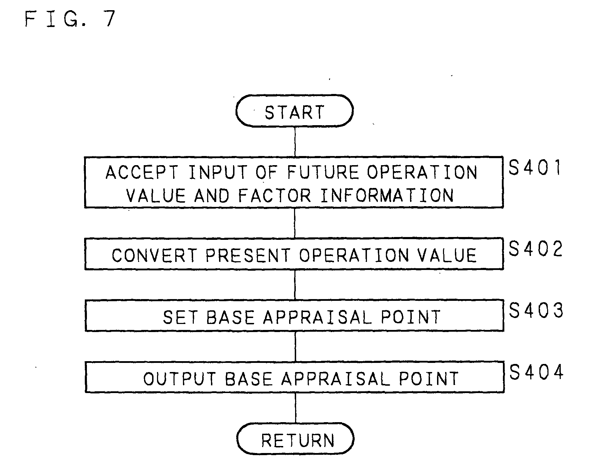

Next, referring to the flowchart shown in FIG. 7, the following description will explain the present-operation-value setting processes performed in the remuneration calculating apparatus 10 of the present invention.

In the present-operation-value setting method shown in the flowchart of FIG. 5, calculation is usually performed by the remuneration calculating apparatus 10.

In other words, a person in charge of this task inputs the future operation value assumed in step S201 and the factor information, such as the development period and success probability, to the remuneration calculating apparatus 10.

The remuneration calculating apparatus 10 accepts the input of the future operation value and the factor information (S401), converts the future operation value to a present operation value based on the accepted future operation value and factor information (S402), sets a base appraisal point based on the present operation value (S403), and outputs the set base appraisal point (S404).

A person in charge of this task confirms the outputted base appraisal point and inputs it to the remuneration calculating apparatus 10, or it is also possible to arrange the base appraisal point set in step S403 to be processed automatically for the input accepting process shown in step S301.

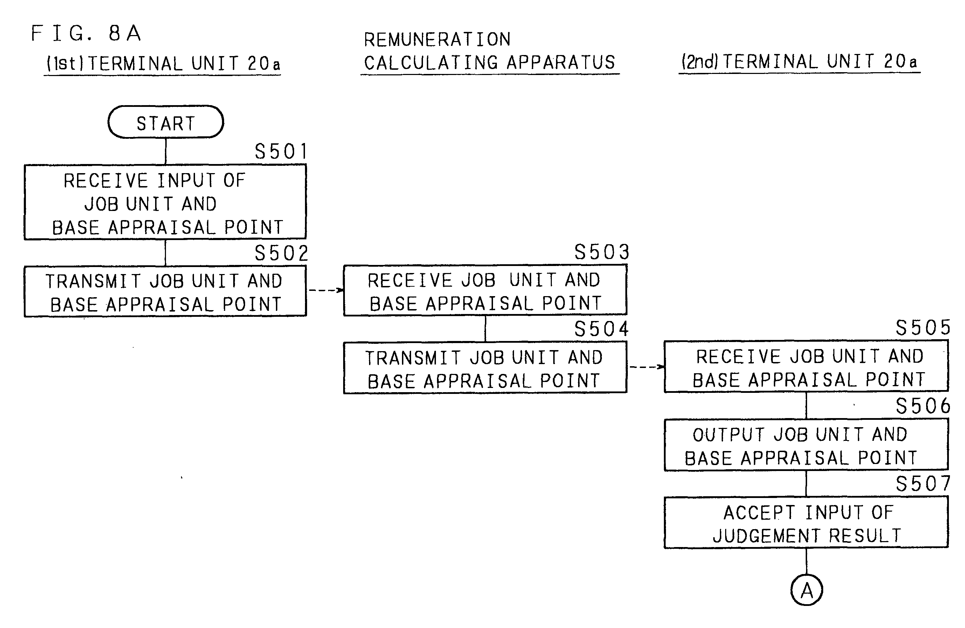

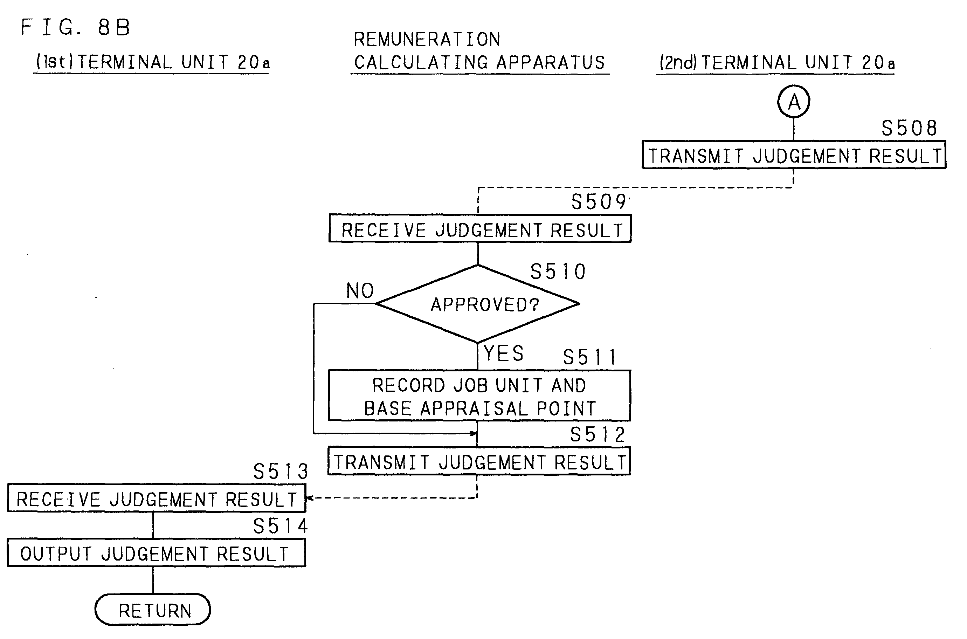

Next, referring to the flowchart shown in FIG. 8A and FIG. 8B, the following description will explain the job unit and base appraisal point setting processes performed in the remuneration calculating apparatus 10 and the terminal unit 20 for use with the remuneration calculating method of the present invention.

The job unit and base appraisal point inputted in step S301 of FIG. 6 and the base appraisal point determined in step S403 of FIG. 7 are not necessarily determined by a certain worker and service agent appointed to perform the setting work or by the processes of the remuneration calculating apparatus 10, and may be proposed by a worker 200 himself or herself performing the work.

In this case, however, it is also necessary to have an approval of the certain worker 200 or service agent appointed as an approver (hereinafter referred to as the "approver").

For example, in the case where a worker 200 who has been appointed to perform the work operates a first terminal unit 20a and the approver operates a second terminal unit 20b, the worker 200 determines a job unit, which indicates the contents of the job unit of the work assigned to him or her or work proposed by the worker 200 himself or herself, and its base appraisal point, and inputs the determined job unit and base appraisal point into the first terminal unit 20a for proposal.

The first terminal unit 20a accepts the input of the job unit and base appraisal point (S501), and transmits the accepted job unit and base appraisal point to the remuneration calculating apparatus 10 (S502).

The remuneration calculating apparatus 10 receives the job unit and base appraisal point (S503), and transmits the received job unit and base appraisal point to the second terminal unit 20b (S504).

The second terminal unit 20b receives the job unit and base appraisal point (S505), and outputs the received job unit and base appraisal point (S506).

The approver confirms the outputted job unit and base appraisal point, judges whether they are to be approved based on the confirmation results, and inputs the judgement result to the second terminal unit 20b.

The second terminal unit 20b accepts the input of the judgement result (S507), and transmits the accepted judgment result to the remuneration calculating apparatus 10 (S508).

The remuneration calculating apparatus 10 receives the judgement result (S509), and records the job unit and the judgement result in the work database 10a (S511), when the received judgement result is "approved" (S510: YES).

This recording process is dealt in the same manner as in the processes of step S302 of FIG. 6 and step S403 of FIG. 7.

Note that, when the judgment result is "not approved" in step S510 (S510: NO), the process of step S511 is not performed.

Therefore, the remuneration calculating apparatus 10 transmits the judgment result to the first terminal unit 20a (S512).

The first terminal unit 20a receives the judgement result (S513), and outputs the received judgement result (S514).

The worker 200 confirms the judgement result, and reviews the work if the judgement result is "not approved".

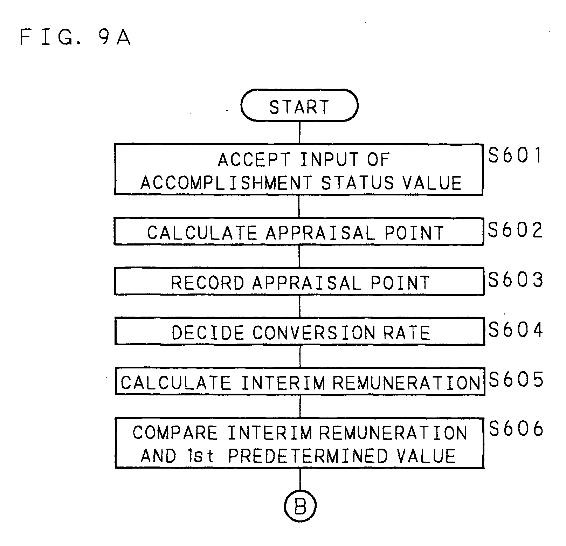

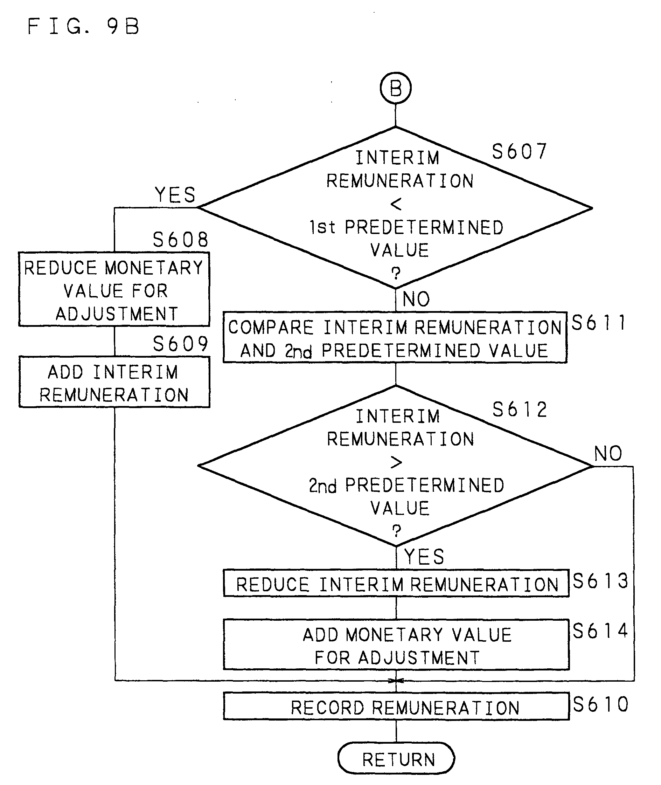

Next, referring to the flowchart shown in FIG. 9A and FIG. 9B, the following description will explain the remuneration calculating processes performed in the remuneration calculating apparatus 10 of the present invention.

An appraiser who appraises the working progress of the worker 200 determines an accomplishment status value, which is given in numeric value such as 100%, 80%, 30% or the like, according to the accomplishment status of each job unit, and informs the value to the person in charge of inputting.

It should be noted that the appraiser and the person in charge of inputting may be the same person.

The remuneration calculating apparatus 10 accepts the input of the accomplishment status value (S601), calculates an appraisal point by multiplying the accepted accomplishment status value and base appraisal point together (S602), and records the calculated appraisal point in conjunction with the worker's information in the work database 10a (S603).

Then, the remuneration calculating apparatus 10 accesses the operating-performance database 10b and determines a conversion rate based on the operating performance of the enterprise entity 100 for the current term (S604), and calculates an interim remuneration by multiplying the appraisal point recorded in the work database 10a and the determined conversion rate together (S605).

Thereafter, the remuneration calculating apparatus 10 compares the calculated interim remuneration with a first predetermined value indicating a minimum remuneration (S606), and if the interim remuneration is lower than the first predetermined value (S607: YES), then deducts a monetary value for adjustment recorded in the profit and loss database 10e by an amount equivalent to the difference between the interim remuneration and the first predetermined value (S608), adds the deducted amount to the interim remuneration (S609), and records the calculated result as remuneration in conjunction with the worker's information in the remuneration database 10c (S610).

As a result of the comparison in step S606, if the interim remuneration is higher than the first predetermined value (NO: S607), then the remuneration calculating apparatus 10 compares the interim remuneration with a second predetermined value which is set higher than the first predetermined value (S611). If the interim remuneration is higher than the second predetermined value (S612: YES), then the remuneration calculating apparatus 10 deducts the interim remuneration by multiplying the interim remuneration by a predetermined rate (S613), adds the deducted amount to the monetary value for adjustment recorded in the debt and credit database 10e (S614), and records the calculated result as remuneration in conjunction with the worker's information in the remuneration database 10c (S610).

As a result of the comparison in step S611, if the interim remuneration is lower than the second predetermined value (NO: S612), then the remuneration calculating apparatus 10 records the interim remuneration as remuneration in conjunction with the worker's information in the remuneration database 10c (S610).

Note that it is not necessarily to perform the remuneration adjusting processes in steps S606 through S614, and these processes may be included in the contents of the agreement made between the enterprise entity 100 and the worker 200 according to a need. If the remuneration adjustment processes are not performed, it is possible to almost perfectly reflect the results of work executed by the worker 200 on his or her remuneration, so that remuneration can be managed at an individual's discretion. On the other hand, if a minimum remuneration is ensured by adjustment of remuneration, then it is possible to limit an excessive increase and decrease of remuneration, stabilize the life of the workers 200 and reduce unfair feelings between the workers 200.

Moreover, those which are used as the monetary value for adjustment are not limited to monetary values to be paid to the workers in the future, such as retirement allowance, and, for example, it is possible to set monetary values which are given as allowance to the workers 200 according to their qualification and position by just being employees of the enterprise entity 100 and use the monetary values as the monetary value for adjustment.

Further, in the case where the monetary value for adjustment is considered as funds to be used by the enterprise entity 100 as a whole, it is possible to include a part of sales (interim remuneration) of excellent workers 200 or workers 20 who execute work that directly produces profits in the form of so-called aids or the like to the enterprise entity 100, and allocate the amount to workers 200 who can not carry out sufficient work, such as newly hired employees, or workers 200 who execute work that does not directly produce profits to keep the balance of remuneration between the workers 200.

However, if the idea of allocating a part of the remuneration of excellent workers 200 to workers 200 who can not perform sufficient work is adopted, it is assumed that the excellent workers 200 deposit a monetary value in the enterprise entity 100 and the workers 200 who do not perform sufficient work borrow a monetary value from the enterprise entity 100, and such conditions need to be recorded in the debt and credit database 10e so as to make an adjustment for preventing a constant loss to the excellent workers 200.

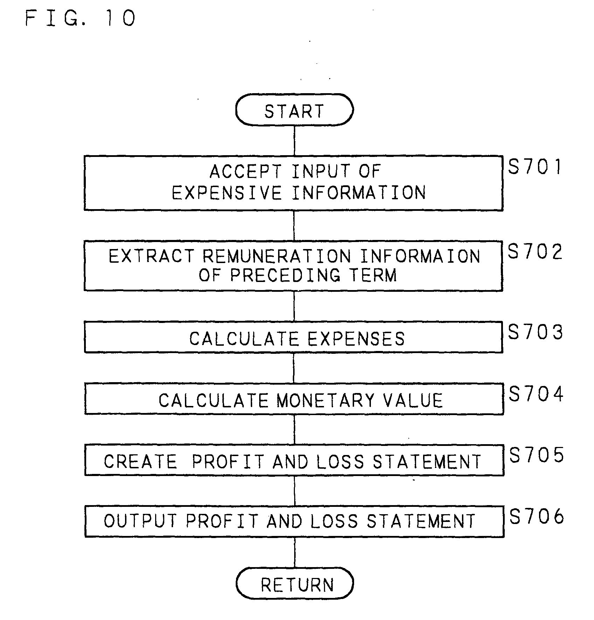

Next, referring to the flowchart shown in FIG. 10, the following description will explain the profit and loss statement creating processes performed in the remuneration calculating apparatus 10 of the present invention.

When the worker 200 accomplishes work assigned as a job unit, the enterprise entity 100 gains an income and allocates the income as remuneration to the worker 200.

Moreover, the enterprise entity 100 bears overhead expenses needed by the worker 200 to accomplish the work.

Here, not only expenses used in a general sense, such as travelling and lodging expenses, are referred to as the expenses, but also remuneration to the worker 200 is regarded as an expense needed for the enterprise entity 100 to obtain the income.

This means that there is a two-way flow of monetary values between the worker 200 and the enterprise entity 100, and this two-way flow of monetary values can be expressed as a profit and loss statement of the worker 200 to the enterprise entity 100.

Further, one that records the expenses needed for the work of the worker 200 and the results (remuneration) of the work for each job unit for the purpose of creating the profit and loss statement is the profit and loss database 10d in which the respective expenses are recorded in conjunction with various types of remuneration information showing the interim remuneration calculated in step S605 of the remuneration calculating process and the remuneration recorded in the remuneration database 10c in step S610.

As such a method of creating a profit and loss statement, first, a person in charge of this task inputs expense information showing overhead expenses required by the worker 200 to perform the work into the remuneration calculating apparatus 10.

The remuneration calculating apparatus 10 accepts the input of the expense information (S701), extracts the remuneration information of preceding term showing the remuneration of the worker 200 for the preceding term from the remuneration database 10d (S702), and calculates expenses needed for accomplishing the job unit, based on the accepted expense information and the extracted remuneration information of preceding term (S703).

Then, the remuneration calculating apparatus 10 calculates a monetary value of the accomplished job unit (S704), creates a profit and loss statement of the worker 200 to the enterprise entity 100 (S705), based on the expenses calculated in step S703 and the monetary value calculated in step S704, and outputs the created profit and loss statement (S706).

It should be noted that the expense information accepted in step S701 is not necessarily accepted whenever an expense is needed, and expenses recorded for each job unit in the profit and loss database 10d may be summed up and the calculated sum may be used as the expense information.

Here, the "preceding term" refers to a term just before a certain term regarded as the current term, and the present term is not always expressed as the current term.

Moreover, regarding the profit and loss statement created in the processes of steps S701 through S706, it is possible to create not only a profit and loss statement for the whole term but also a profit and loss statement for each job unit, and it is further possible to create a profit and loss statement for a job unit which is to be performed from now by inputting estimated values for the accomplishment status value and expenses and use this statement as a reference for deciding whether this job is to be executed.

When the profit and loss statement for the whole term is to be created, the remuneration information of the preceding term extracted from the remuneration database 10d as shown in step S702 is used as it is for a part of expenses. In contrast, when a profit and loss statement is created for each job unit, the remuneration information of the preceding term is converted to a period needed for the job unit and expenses are calculated based on the converted remuneration information of the preceding term.

Moreover, for workers 200 whose remuneration of the preceding term is not recorded in the remuneration database 10c, such as newly hired employees and employees hired in mid-carrier, it is possible to create a profit and loss statement based on the expenses needed for each job unit and the interim remuneration (remuneration for a current term before adjusted) recorded in the profit and loss database 10d.

Note that the creation of a profit and loss statement based on the expenses for each job unit and the interim remuneration recorded in the profit and loss database 10d may be adopted not only for the workers 200 whose remuneration of the preceding term is not recorded in the remuneration database 10c, but also for creation of a profit and loss statement of each job unit based on estimated values.

Further, regarding the monetary value of an job to be calculated in step S704, it is possible to use various monetary values such as the remuneration of each job unit, the interim remuneration for the whole term and the adjusted remuneration.

In other words, it is possible to create a profit and loss statement by selecting an optimum monetary value (remuneration) and expenses according to the way of viewing the flow of monetary values between the enterprise entity 100 and the worker 200. Further, in some case, it is possible to submit a profit and loss statement created by each worker 200 as an index for self-appraisal in making a new labor agreement with other enterprise entity 100 and use this profit and loss statement as an index of objective market values of human resources.

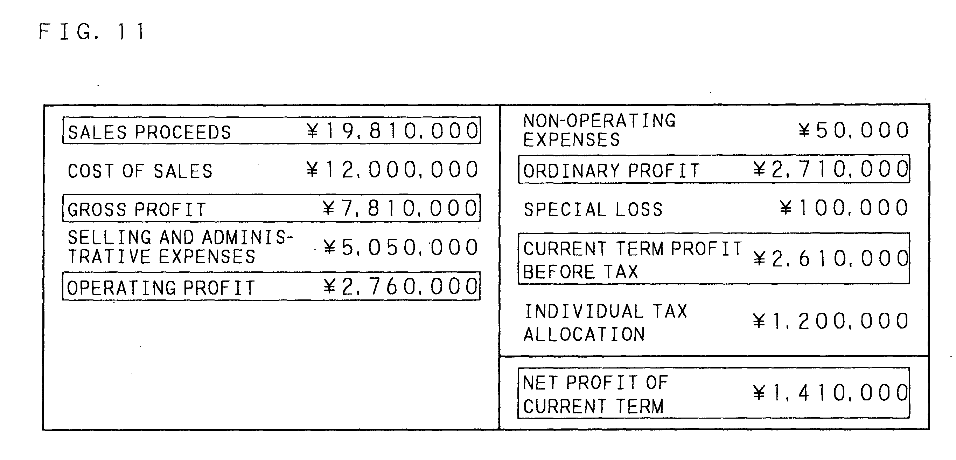

FIG. 11 is an explanatory view showing a profit and loss statement outputted by the remuneration calculating apparatus 10 of the present invention.

In the profit and loss statement shown as an example in FIG. 11, the sales proceeds show a monetary value the enterprise entity 100 earned from the work of the worker 200, the cost of sales becomes the remuneration of the worker 200 for the preceding term, and the difference between the sales proceeds and the cost of sales is recorded as the gross profit.

It can be considered from the viewpoint of the enterprise entity 100 that the enterprise entity 100 gains the sales proceeds and the gross profit by payment of the remuneration of the worker 200 as an expense.

Besides, the selling and administrative expenses refer to expenses, such as travelling and lodging expenses, book and research expenses and reception expenses, and the operating profit is the difference between the gross profit and the selling and administrate expenses.

Further, the ordinary profit is the difference between the operating profit and the non-operating expenses, and the special loss, current-term profit before taxes and individual tax allocation are successively calculated from the ordinary profit so as to finally calculate the net profit for the current term.

Thus, by creating the current-term profit and loss statement of the worker 200 to the enterprise entity 100, it is possible to appraise the labor value of the worker 200.

Note that it is also possible to create and output a profit and loss statement for each job unit, so that the workers 200 can grasp their labor value for the corresponding job units.

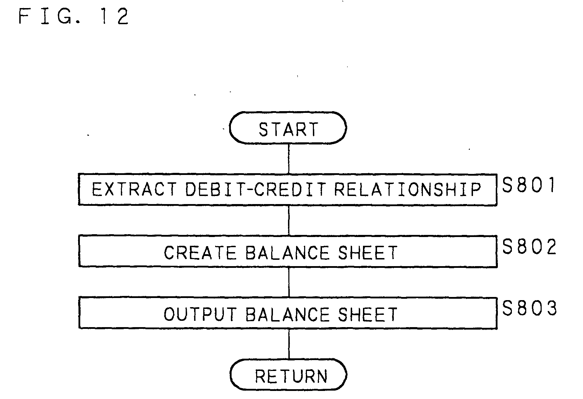

Next, referring to the flowchart shown in FIG. 12, the following description will explain the balance sheet creating processes performed in the remuneration calculating apparatus 10 of the present invention.

When the worker 200 has a deposit and savings such as an employee deposit and asset accumulation savings and a debt such as a housing loan with respect to the enterprise entity 100, a debt-credit relationship is established between the worker 200 and the enterprise entity 100, and this relationship can be expressed as a balance sheet of the worker 200 to the enterprise entity 100.

Such a balance sheet is created by extracting the debt-credit relationship of the worker 200 recorded in the debt and credit database 10e (S801), creating a balance sheet after adjusting numeric values in the extracted debt-credit relationship by using the monetary value for adjustment (S802), and outputting the created balance sheet (S803).

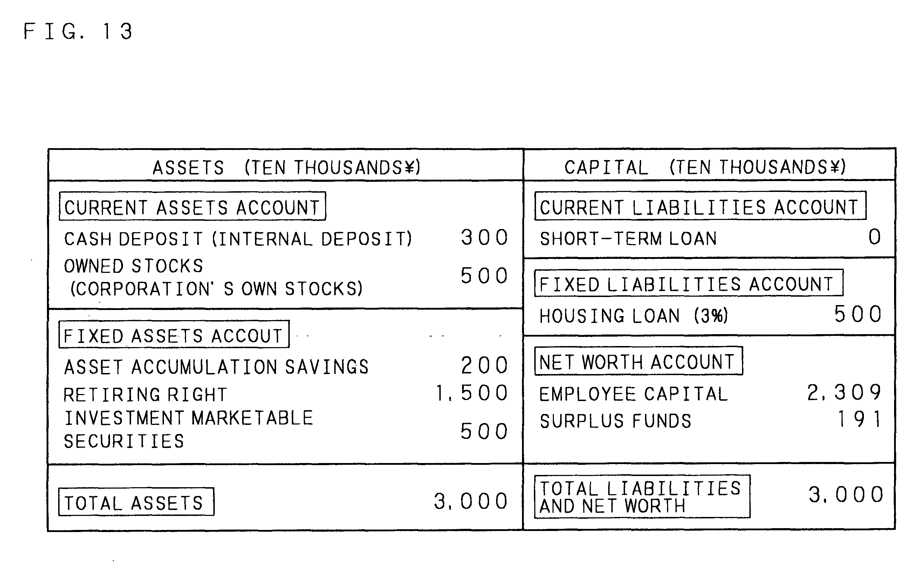

FIG. 13 is an explanatory view showing a balance sheet outputted by the remuneration calculating apparatus 10 of the present invention.

In the balance sheet shown in FIG. 13, the current assets are monetary values that can be converted to cash within one year, such as a cash deposit (employee deposit) and marketable securities (corporation's own stocks) in the enterprise entity 100.

The fixed assets are monetary values that can not be converted to cash within one year, such as asset accumulation savings in the enterprise entity 100, a retiring right representing retirement allowance to be paid to the worker 200 in the future and the market values of investment market securities called stock option that is offered at a special price by the corporation and can not be freely converted to cash.

Note that, when the retiring right is dealt as the monetary value for adjustment, this can not be converted to cash directly but may be paid as remuneration for adjustment in some case.

Further, the total assets given by summing up the current assets and the fixed assets are shown.

The current liability is a monetary value the worker 200 must pay the enterprise entity 100 within one year, for example, a short-term loan the worker 200 has borrowed from the enterprise entity 100.

The fixed liability shows a monetary value the worker 200 needs not to pay the enterprise entity 100 its whole amount within one year, for example, a long-term loan such as a housing loan the worker 200 has borrowed from the enterprise entity 100.

Employee capital and surplus funds are taken to be the net worth and they can be regarded as monetary values allocated to adjust the assets and capital, and it may be considered that an increase or decrease in the retiring right causes an increase or decrease in the employee capital and surplus funds taken as the monetary value for adjustment.

Accordingly, by creating the balance sheet of the worker 200 to the enterprise entity 100, the worker 200 can grasp his or her labor value and connect them to designing of stable life.

In the above-described embodiment, while a cycle of determining the conversion rate is not particularly specified, a cycle suitable for each enterprise entity 100 can be set individually by, for example, a fluctuating rate method of determining a conversion rate at intervals of a short period such as one month, a fixed rate method of using a single conversion rate for one or more years, or a combination of the fluctuating rate method or the fixed rate method and a formula rate method of determining a conversion rate by a certain formula so that jobs, such as an job for developing a new product and new operation, which are important job units for the enterprise entity 100 but are hardly connected to the operating performance, are treated more favorably than expected in respect of the monetary values.

As described above, in the remuneration calculating method, remuneration calculating apparatus and computer memory product according to the present invention, work is divided into job units, a base appraisal point is set for each job unit, and all or part of the amount of the base appraisal point is given as an appraisal point to a worker according to the accomplishment status of the job unit. The contents and results of work performed by the worker can be appraised for each job unit, and remuneration is calculated by multiplying the given appraisal point by a conversion rate determined by the operating performance of an enterprise entity. Therefore, for example, by decreasing the conversion rate when the operating performance of the enterprise entity became worth, or by increasing the conversion rate when the operating performance was improved, the operating performance of the enterprise entity can be reflected on remuneration, and by further introducing a system of changing the conversion rate at short-period intervals, then the operating performance is reflected on remuneration in a short period. It is thus possible to produce excellent effects for both of the workers and enterprise entity that the workers' will to work is heightened and the enterprise entity can run sound business.

Moreover, since a profit and loss statement and a balance sheet of the worker to the enterprise entity are created, the present invention produces excellent effects that the worker can grasp his or her own labor value, estimate remuneration to be obtained and connect them to designing of his or her life.

Furthermore, according to the present invention, a base appraisal point for work such as sales work which is directly connected to profits is set based on the present operation value representing the results of labor, a base appraisal point for clerical work, such as work related to general affairs and accounting, which is not directly connected to profits is set based on how the expenses needed for the work or personnel expenses in some case are limited as compared to other company or a model employee, and a base appraisal point for work, such as research work and planning work, whose results will be known in the future is set by assuming an operation value at a specific time point in the future, adding factors, such as the development period and success probability, and converting the resultant value to a present operation value. Accordingly, the present invention produces excellent effects that it is possible to fairly appraise different types of work.

Additionally, according to the present invention, monetary values which are not directly connected to work at the present time, including monetary values such as retirement allowance to be paid to the workers in the future and monetary values given as allowance according to the qualification and positions of workers by just being employees of the enterprise entity, are taken to be a monetary value for adjustment, and, if an interim remuneration calculated primarily is less than a first predetermined value, the shortage is covered by the monetary value for adjustment, or, if the interim remuneration is not less than a second predetermined value, the monetary value for adjustment is increased. Accordingly, the present invention produces excellent effects that it is possible to limit an excessive increase and decrease of remuneration and stabilize the workers' life.

Furthermore, according to the present invention, when the monetary value for adjustment is considered as funds to be used by the enterprise entity as a whole, a part of remuneration of excellent workers or workers executing work that directly produces profits is taken in the form of so-called aids or the like, and the taken amount is allocated to workers who can not carry out sufficient work, such as newly hired employees, or workers who execute work which do not directly produce profits according to a need, thereby producing excellent effects that it is possible to keep the balance of remuneration between the workers.

## Claims

1. A remuneration calculating method for calculating remuneration of workers who have made a labor agreement with an enterprise entity, **characterized in that**:
work is divided into job units to be executed by one or a plurality of persons (S101);
a base appraisal point for quantitatively appraising each of the job units is set (S103);
each worker is given an appraisal point which represents whole or some amount of a base appraisal point set for each job unit, according to an accomplishment status of the job unit (S602);
a conversion rate for converting an appraisal point to a monetary value is determined (S604); and
remuneration of each worker is calculated by converting an appraisal point given to the worker based on the conversion rate (S605).

2. The remuneration calculating method as set forth in Claim 1, **characterized in that**:
expenses including remuneration of the worker, which were needed for accomplishing the job unit is calculated (S703);
a monetary value of the accomplished job unit is calculated (S704); and
a profit and loss statement of the worker to the enterprise entity for a predetermined term is created, based on the calculated expenses and monetary value (S705).

3. The remuneration calculating method as set forth in Claim 1 or 2, **characterized in that** said job unit and base appraisal point are set by being proposed by the worker and approved by an approver appointed beforehand (S301).

4. The remuneration calculating method as set forth in any one of Claims 1 to 3, **characterized in that** said base appraisal point is set based on a present operation value representing an operation value at present and/or expenses needed for the operation (S301).

5. The remuneration calculating method as set forth in any one of Claims 1 to 3, **characterized in that** an operation value at a specific time point in the future is assumed as a future operation value, the assumed future operation value is converted into a present operation value representing an operation value at present, and said base appraisal point is set based on the present operation value (S401).

6. The remuneration calculating method as set forth in any one of Claims 1 to 5, **characterized in that**:
an interim remuneration is calculated from the conversion rate and appraisal point (S605);
a monetary value for adjustment which has been prepared is deducted, if the interim remuneration is lower than the first predetermined value (S608);
remuneration of the worker is calculated by adding the deducted value to the interim remuneration (S609);
the monetary value for adjustment is increased, if the interim remuneration is higher than the second predetermined value (S614); and
remuneration of the worker is calculated by deducting the increased value from the interim remuneration (S613).

7. The remuneration calculating method as set forth in Claim 6, **characterized in that**:
a debt-credit relationship between the enterprise entity and the worker is calculated (S801); and
a balance sheet of the worker to the enterprise entity is created after adjusting the calculated debt-credit relationship by using the monetary value for adjustment (S802).

8. A remuneration calculating method for calculating remuneration of workers who have made a labor agreement with an enterprise entity, **characterized by** comprising the steps of:
dividing work into job units to be executed by one or a plurality of persons (S101);
setting a base appraisal point for quantitatively appraising each of the job units (S103);
giving each worker an appraisal point which represents whole or some amount of a base appraisal point set for each job unit, according to an accomplishment status of the job unit (S602);
determining a conversion rate for converting an appraisal point to a monetary value (S604); and
calculating remuneration of each worker by converting an appraisal point given to the worker based on the conversion rate (S605).

9. The remuneration calculating method as set forth in Claim 8, **characterized by** further comprising the steps of:
calculating expenses including remuneration of the worker, which were needed for accomplishing the job unit (S703);
calculating a monetary value of the accomplished job unit (S704); and
creating a profit and loss statement of the worker to the enterprise entity for a predetermined term, based on the calculated expenses and monetary value (S705).

10. The remuneration calculating method as set forth in Claim 8 or 9, **characterized by** further comprising the steps of:
calculating an interim remuneration from the conversion rate and appraisal point (S605);
deducting a monetary value for adjustment which has been prepared, if the calculated interim remuneration is lower than the first predetermined value (S608);
calculating remuneration of the worker by adding the deducted value to the interim remuneration (S609);
increasing the monetary value for adjustment, if the calculated interim remuneration is higher than the second predetermined value (S614); and
calculating remuneration of the worker by deducting the increased value from the interim remuneration (S613).

11. The remuneration calculating method as set forth in Claim 10, **characterized by** further comprising the steps of:
calculating a debt-credit relationship between the enterprise entity and the worker (S801); and
creating a balance sheet of the worker to the enterprise entity after adjusting the calculated debt-credit relationship by using the monetary value for adjustment (S802).

12. A remuneration calculating apparatus for calculating remuneration of workers who have made a labor agreement with an enterprise entity, **characterized by** comprising:
means (11) for accessing a work database (10a) in which information about work is recorded in conjunction with an appraisal point indicating an appraised value of work;
means (11) for accessing an operating-performance database (10b) in which information about operating performance of the enterprise entity is recorded in conjunction with a conversion rate for converting an appraised point to a monetary value;
means (11) for accepting input of a job unit given by dividing work, a base appraisal point set for the job unit, and worker's information indicating a worker assigned the job unit;
means (11) for recording the accepted job unit, base appraisal point and worker's information in conjunction with each other in said work database (10a);
means (11) for accepting input of an accomplishment status value indicating an accomplishment status of the job unit;
means (11) for calculating an appraisal point based on the accepted accomplishment status value and base appraisal point;
means (11) for recording the calculated appraisal point in conjunction with the worker's information in said work database (10a);
means (11) for determining a conversion rate based on the information recorded in said operating-performance database (10b); and
calculating means (11) for calculating remuneration of the worker based on the conversion rate and appraisal point.

13. The remuneration calculating apparatus as set forth in Claim 12, **characterized by** further comprising:
means (11) for calculating expense information indicating expenses needed for accomplishing the job unit;
means (11) for calculating a monetary value resulting from accomplishment of the job unit; and
means (11) for creating a profit and loss statement of the worker to the enterprise entity based on the calculated expense information and monetary value.

14. The remuneration calculating apparatus as set forth in Claim 12 or 13, **characterized by** further comprising:
means (11) for accepting input of a future operation value representing an operation value at a specific time point in the future;
means (11) for converting the accepted future operation value to a present operation value representing an operation value at present; and
means (11) for setting a base appraisal point based on the present operation value.

15. The remuneration calculating apparatus as set forth in any one of Claims 12 to 14, **characterized by** further comprising:
means (11) for accessing a debt and credit database (10d) in which a debt-credit relationship between the enterprise entity and the worker, including a monetary value for adjustment for adjusting remuneration, is recorded;
means (11) for calculating an interim remuneration from the conversion rate and appraisal point;
means (11) for deducting the monetary value for adjustment recorded in said debt and credit database (10d), if the interim remuneration is lower than a first predetermined value; and
means (11) for increasing the monetary value for adjustment recorded in said debt and credit database (10d), if the interim remuneration is higher than a second predetermined value which is not lower than the first predetermined value,
wherein, when the monetary value for adjustment was deducted, said calculating means (11) calculates remuneration of the worker by adding a deducted value to the interim remuneration, and, when the monetary value for adjustment was increased, said calculating means (11) calculates remuneration of the worker by deducting an increased value from the interim remuneration.

16. The remuneration calculating apparatus as set forth in Claim 15, **characterized by** further comprising means (11) for creating a balance sheet of the worker to the enterprise entity, after adjusting the debt-credit relationship recorded in said debt and credit database (10d) by using the monetary value for adjustment.

17. A computer-readable computer memory product on which a program for causing a computer to calculate remuneration of workers who have made a labor agreement with an enterprise entity, **characterized by** including:
program code means for causing a computer to accept input of a job unit given by dividing work, a base appraisal point set for the job unit, and worker's information indicating a worker assigned the job unit;
program code means for causing a computer to record the accepted job unit, base appraisal point and worker's information in conjunction with each other;
program code means for causing a computer to accept input of an accomplishment status value indicating an accomplishment status of the job unit;
program code means for causing a computer to calculate an appraisal point indicating an appraised value of work based on the accepted accomplishment status value and base appraisal point;
program code means for causing a computer to determine a conversion rate for converting the appraisal point to a monetary value; and
program code means for causing a computer to calculate remuneration of the worker based on the conversion rate and appraisal point.
